(19) **Europäisches Patentamt / European Patent Office / Office européen des brevets**

(11) **EP 2 694 882 B1**

(12) **EUROPEAN PATENT SPECIFICATION**

(45) Date of publication and mention of the grant of the patent:
**23.11.2016 Bulletin 2016/47**

(21) Application number: **12764441.7**

(22) Date of filing: **29.03.2012**

(51) Int Cl.:
*F24H 1/10* (2006.01)  *F24H 9/20* (2006.01)
*F24H 9/18* (2006.01)  *A61H 35/00* (2006.01)
*F24H 1/12* (2006.01)

(86) International application number:
**PCT/KR2012/002315**

(87) International publication number:
**WO 2012/134189 (04.10.2012 Gazette 2012/40)**

(54) **WARM WATER SUPPLY DEVICE AND WARM WATER SUPPLY METHOD**

WARMWASSERVERSORGUNGSVORRICHTUNG SOWIE WARMWASSERVERSORGUNGSVERFAHREN

DISPOSITIF D'ALIMENTATION EN EAU CHAUDE ET PROCÉDÉ D'ALIMENTATION EN EAU CHAUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2011 KR 20110030250**
**28.12.2011 KR 20110144655**
**22.03.2012 KR 20120029403**

(43) Date of publication of application:
**12.02.2014 Bulletin 2014/07**

(73) Proprietor: **Coway Co., Ltd.**
**Chungcheongnam-do 314-895 (KR)**

(72) Inventors:
- **SON, Tae-Yong**
  **Seoul 151-185 (KR)**
- **LEE, Soo-Young**
  **Seoul 151-185 (KR)**
- **LEE, Kyung-Heon**
  **Seoul 151-185 (KR)**
- **JUNG, Hee-Do**
  **Seoul 151-185 (KR)**

- **LEE, Hyun-Woo**
  **Seoul 151-185 (KR)**
- **MOON, Hyoung-Min**
  **Seoul 151-185 (KR)**
- **HONG, Jin-Pyo**
  **Seoul 151-185 (KR)**
- **KIM, Yong-Bum**
  **Seoul 151-185 (KR)**

(74) Representative: **Vidon Brevets & Stratégie**
**16B, rue de Jouanet**
**B.P. 90333**
**Technopole Atalante**
**35703 Rennes Cedex 7 (FR)**

(56) References cited:
**EP-A2- 0 138 171     EP-A2- 2 299 184**
**DE-A1- 4 440 492     GB-A- 2 281 381**
**JP-A- 2002 147 854     JP-A- 2007 101 039**
**JP-A- 2008 232 616     KR-B1- 100 631 339**
**US-A- 4 713 525**

## Description

## Technical Field

The present invention relates to a warm water supply device and a warm water supply method, and more particularly, to an instant warm water supply device and an instant warm water supply method capable of rapidly supplying warm water.

## Background Art

A warm water supply device employed in a home bidet, a water purifier, or the like, may be classified as a water tank-type warm water supply device in which a heater is installed in a water tank or as an instant warm water-type warm water supply device in which a heater is used to heat water to be supplied whenever warm water is required.

In the water tank-type warm water supply device, the temperature of water within a water tank is constantly maintained at a set temperature, regardless of whether or not warm water is required, and thus, standby power is wasted and much space is occupied. Thus, recently, an instant warm water-type warm water supply device in which water to be supplied is instantly heated is commonly used, according to user demand for of warm water.

Patent Application EP2299184A discloses an instant water heater for supplying warm water, wherein the heater driving cycle is controlled in order to meet the output temperature. Patent application GB2281381A describes another electric instantaneous water heater, where the water outlet temperature is met by controlling the flow of water through a control valve and the energisation of the heat source.

However, in the related art instant warm water-type warm water supply device, the temperature of warm water is adjusted by controlling a driving period of a heater, and noise is frequently generated from a power system to which the heater is connected.

Noise may cause the warm water supply device to be damaged or overheated and degrade efficiency. In particular, when noise of a harmonic component is generated, temperature of a transformer, or the like, supplying power to the warm water supply device may be increased to cause a fire.

Also, when flickering occurs, a load applied to a power supply device may be rapidly changed to cause a problem in the operation of other load type devices connected to the power supply device.

## Disclosure of Invention

## Technical Problem

An aspect of the present invention provides a warm water supply device and a warm water supply method capable of preventing the generation of damage or overheating by reducing frequent noise.

## Solution to Problem

According to an aspect of the present invention, there is provided a warm water supply device according to claim 1, including: a heater heating water introduced therein with a heating capacity; an introduction valve adjusting an amount of water introduced to the heater; and a valve controller controlling a degree of opening and closing of the introduction valve by using a target water temperature and the heating capacity.

The valve controller calculates a flow rate of water to be introduced into the heater through an equation shown below, and controls the degree of opening and closing of the introduction valve according to the calculated flow rate,

$$V = \frac{w\Delta t}{c\rho(T_1 - T_2)}$$

wherein V is a volume of introduced water, w is a heating capacity, c is specific heat, $\rho$ is density of water, $\Delta t$ is a heating time duration, $T_1$ is a target water temperature, and $T_2$ is a temperature of introduced water.

The heater may set the heating capacity as a maximum heating capacity of the heater.

The warm water supply device may further include: a flow rate sensing unit sensing an amount of water introduced to the heater; and a heater driving controller not operating the heater when the sensed amount of water is equal to or less than a minimum operation flow rate.

The heater driving controller may control the heating capacity of the heater by adjusting an operating period of the heater according to a phase control scheme or a zero crossing control scheme.

According to the invention the valve controller includes: a feedback unit receiving feedback from at least any one of a current and a voltage applied to the heater, and the feedback unit calculates a feedback heating capacity of the heater by using at least any one of the current and voltage sensed by the feedback unit, and then resets the degree of opening and closing of the introduction valve by using the feedback heating capacity and the target water temperature.

According to preferred aspect of the present invention, the heater comprises an upper plate heater heating water introduced therein with a first heating capacity; a lower plate heater opposed to the upper plate heater and heating the introduced water with a second heating capacity; a heating flow channel provided between the upper plate heater and the lower plate heater.

The controller may adjust the size of the overall heating capacity for heating the introduced water by selecting any one of the upper plate heater and the lower plate heater.

The controller may select at least one of the upper plate heater and the lower plate heater by using the target water temperature, a flow rate of water introduced to the heating flow channel, and a temperature of the introduced water.

According to another aspect of the present invention, there is provided a warm water supply method according to claim 8, including: a flow rate calculation step of calculating an amount of water to be introduced to a heater by using a target water temperature and a heating capacity of the heater; an introduction valve control step of adjusting a degree of opening and closing of the introduction valve to allow water to be introduced to the heater at the calculated flow rate; and a heating step of heating the water introduced to the heater with the heater.

In the flow rate calculation step, a flow rate of water to be introduced to the heater is calculated through an equation shown below,

$$V = \frac{w\Delta t}{c\rho(T_1 - T_2)}$$

wherein V is a volume of introduced water, w is a heating capacity, c is specific heat, p is density of water, $\Delta t$ is a heating time duration, $T_1$ is a target water temperature, and $T_2$ is a temperature of introduced water.

The heating capacity may be a maximum heating capacity of the heater.

The heating step may include: an inflow amount sensing process of sensing an amount of water introduced to the heater; and a minimum flow rate checking process of not operating the heater when the sensed amount of water is equal to or less than a minimum operation flow rate.

In the heating step, the heating capacity of the heater may be controlled by adjusting an operating period of the heater according to a phase control scheme or a zero crossing control scheme.

The heater may include an upper plate heater having a first heating capacity and a lower plate heater having a second heating capacity, and the method may further include: a heating capacity selecting step of selecting any one of the upper plate heater and the lower plate heater to adjust the size of the overall heating capacity.

In the heating capacity selecting step, at least any one of the upper plate heater and the lower plate heater may be selected by using the target water temperature, a flow rate of introduced water, and temperature of the introduced water.

The flow rate calculation step according to the invention includes a feedback step of receiving feedback from at least any one of a current and a voltage applied to the heater and calculating a feedback heating capacity of the heater; and an error correction step of re-setting an amount of water introduced to the heater by using the feedback heating capacity and the target water temperature.

## Advantageous Effects of Invention

According to an embodiment of the present invention, in the warm water supply device and the warm water supply method, water output from the heater may be controlled to have a target temperature by adjusting a flow rate of water introduced to the heater. Accordingly, noise can be reduced, and thus, damage to or overheating of the warm water supply device can be prevented and heating efficiency can be enhanced, in comparison to the related art method in which a driving period of the heater is controlled.

Also, in the warm water supply device and the warm water supply method, the size of an overall heating capacity can be adjusted by selectively driving an upper plate heater and a lower plate heater, each having a different heating capacity, without generating noise or the like.

## Brief Description of Drawings

FIG. 1 is a graph for explaining controlling a heating capacity according to a phase control scheme and a zero crossing control scheme.
FIG. 2 is a schematic block diagram showing functions of a warm water supply device according to an embodiment of the present invention.
FIG. 3 is an exploded perspective view showing a heater of the warm water supply device according to an embodiment of the present invention.
FIG. 4 is a perspective view showing the heater of the warm water supply device according to an embodiment of the present invention.
FIG. 5 is a sectional view showing the structures of an upper plate heater, a lower plate heater, and a heating flow channel of a warm water supply device according to another embodiment of the present invention.
FIG. 6 is a flow chart illustrating a warm water supply method according to an embodiment of the present invention.

## Best Mode for Carrying out the Invention

Hereinafter, embodiments of the present invention will be described in detail with reference to the accompanying drawings. The invention as defined in the independent claims may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like components.

It will be understood that when an element is referred to as being "connected with" another element, it can be directly connected with the other element or intervening elements may also be present. In contrast, when an element is referred to as being "directly connected with" another element, there are no intervening elements present.

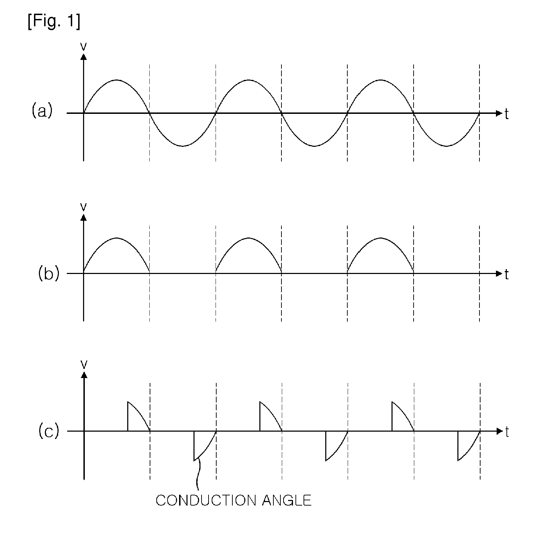

FIG. 1 is a graph for explaining controlling a heating capacity according to a phase control scheme and a zero crossing control scheme.

With reference to FIG. 1, (a) shows an input power voltage V over time (t), and (b) shows a zero crossing control voltage over time (t). When a heater is driven according to the zero cross control scheme, the zero crossing control voltage is input to the heater. In FIG. 1, (c) shows a phase control voltage over time (t), which is input to the heater when the heater is driven according to the phase control scheme.

According to the phase control scheme and the zero crossing control scheme, the heater may receive only a portion of the entire input power according to the driving period of the heater. Since the heater heats introduced water by using input power, the temperature of water heated by the heater may vary according to the driving period of the heater. Thus, the temperature of water output from the heater may be adjusted by controlling a heating capacity of the heater according to the driving period of the heater.

The zero crossing control scheme is a scheme of applying only a positive power voltage in applying an AC power voltage to the heater. The phase control scheme is a scheme of applying a power voltage to the heater at a particular phase at every half period to cut off power at a zero voltage. In the phase control scheme, a phase angle at which the power voltage is applied is called a conduction angle.

According to the phase control scheme and the zero crossing control scheme, as shown in FIGS. 1(b) and (c), only a portion of a voltage waveform of power applied to the heater may be selectively received. The heating capacity of the heater may be determined by the voltage waveform of the received power. Thus, a voltage waveform of power to be received may be selected through the driving period of the heater, and accordingly, the heating capacity of the heater may be controlled.

However, in the case of using the phase control scheme and the zero crossing control scheme, only a portion of the voltage waveform of power applied to the heater is selectively received in order to adjust the temperature of heated water. As mentioned above, when only a portion of the voltage waveform is received, noise or flicker noise may be generated in the heater and the overall power supply system that supplies power to the heater due to a harmonic component.

When such a harmonic component noise is generated, the power supply device, or the like, is overheated, and when the harmonic component is increased, since power consumption is proportional to the square of frequency, power is unnecessarily excessively consumed.

In addition, when flicker noise is generated, a current supply is instantly reduced or increased to potentially damage other load-type devices.

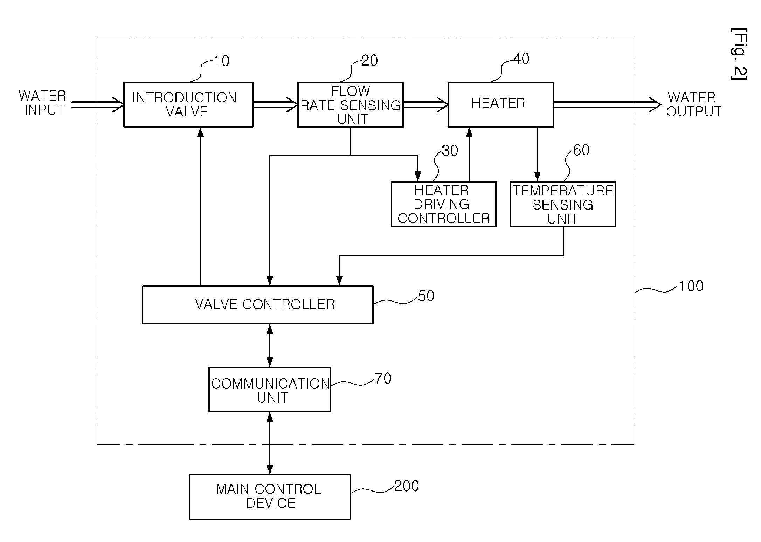

FIG. 2 is a schematic block diagram showing functions of a warm water supply device according to an embodiment of the present invention.

With reference to FIG. 2, a warm water supply device 100 may include an introduction valve 10, a flow rate sensing unit 20, a heater driving controller 30, a heater 40, a valve controller 50, a temperature sensing unit 60, and a communication unit 70.

The warm water supply device 100 according to an embodiment of the present invention will be described with reference to FIG. 2.

The warm water supply device 100 may heat water supplied thereto and provide water having a preset target water temperature.

A main control device 200 may provide the warm water supply device 100 with information regarding the target water temperature, regarding whether to supply water to the warm water supply device 100, a response time duration which may be taken to receive requested warm water from the warm water supply device 100, and the like.

The heater 40 may heat introduced water by a pre-set heating capacity. The heating capacity of the heater 40 is related to power consumption of the heater 40, which may be expressed in watts (W). The heater 40 may start to heat introduced water with a uniform heating capacity until such time as the water reaches a target water temperature level.

Here, the heater 40 may set the heating capacity as a maximum heating capacity with which the heater 40 can be driven.

When water introduced to the heater 40 is heated by the maximum heating capacity of the heater 40, the entire voltage wave form of the input power illustrated in FIG. 1(a) can be received.

Namely, since the voltage of input power is input as a continuous waveform, noise or flicker noise caused by a harmonic component generated when the voltage of the input power is a discontinuous waveform can be prevented.

Here, the heater 40 may include one or a plurality of heat generators, and water introduced to the heater 40 may be heated by using the heat generators.

Upon receiving power from a power source, the heat generators may convert electrical energy into heat energy. Water introduced to the heater 40 may be heated by using the heat energy converted by the heat generators. The sum of the heating capacities of the plurality of heat generators may be determined as the heating capacity of the heater 40. In this case, a heating capacity of each of the heat generators may be equal or different.

The heat generators may directly heat water introduced to the heater 40 or may heat a flow channel through which water introduced to the heater 40 flows, thus indirectly heating water flowing in the flow channel.

Since the heater 40 heats water introduced thereto by using at least any one of the plurality of heat generators, the number of the heat generators changing electric energy into heat energy upon receiving power among the plurality of heat generators may be controlled or a heating capacity of the overall heater 400 may be controlled by the heating capacities of the heat generators.

Also, the voltage waveform of input power may be entirely input such that the plurality of heat generators can be driven at a maximum heating capacity, respectively. When the heat generators are driven at the maximum heating capacity, a voltage waveform of the input power is input as a continuous waveform, minimizing the generation of noise or flicker noise due to the foregoing harmonic component. Thus, the generation of noise or flicker noise due to the harmonic component can be minimized and the heating capacity of the heater 40 can also be controlled by adjusting the number of the plurality of heat generators driven with the maximum heating capacity.

The number of heat generators selected to be driven from among the plurality of heat generators may be determined in consideration of a maximum inflow amount and a minimum inflow amount of water introduced to the heater 40 and a response time required for receiving warm water from the warm water supply device 100 (i.e., a time taken until warm water is provided from the warm water supply device).

For example, among the heat generators, a heat generator having a low maximum heating capacity may be determined to be a first heat generator and a heat generator having a high maximum heating capacity may be determined to be a second heat generator. Also, as for an inflow amount of water introduced to the heater 40, a minimum inflow amount may be determined to be a first water amount, a water amount greater than the minimum inflow amount but less than the maximum inflow amount may be determined to be a second water amount, and a maximum inflow amount may be determined to be a third water amount.

When water is introduced to the heater 40 at the first water amount, the first heat generator may be driven to heat water. In this case, since water corresponding to the minimum inflow amount is introduced, preferably, water is heated by minimizing the heating capacity of the overall heater 400. When a small amount of water introduced to the heater 40 is heated with an excessively great heating capacity, the overall warm water supply device 100 is likely to be overheated. Thus, only the first heat generator having a small maximum heating capacity may be driven to heat the water introduced to the heater 40.

When water is introduced to the heater 40 at the second water amount, the water may be heated by driving the second heat generator. In this case, since an amount of water greater than the minimum inflow amount is introduced to the heater 40, the introduced water should be heated with a greater heating capacity to satisfy a heating target water temperature and a response time requested by a user. Thus, the water introduced to the heater may be heated by using the second heat generator having a greater maximum heating capacity than that of the first heat generator.

When water is introduced to the heater 40 at the third water amount, the water introduced to the heater 40 may be heated by driving both the first and second heat generators. Since water corresponding to the maximum inflow amount is introduced to the heater 40, the maximum heating capacity of the heater 40 is required to be entirely used. Thus, the water introduced to the heater 40 is heated by using both the first and second heat generators, thus satisfying the target water temperature and response time according to a user's request.

Also, when the target water temperature is high or the response time required for receiving requested warm water from the warm water supply device 100 is short, the heating target temperature and the response time requested by the user may be satisfied by reducing a flow rate of water introduced to the heater 40 and increasing the number of heat generators to be driven. The above content may also be applicable to a case in which one heat generator is provided or three heat generators are provided.

The amount of water introduced to the heater 40 may be adjusted through the introduction valve 10. Namely, the amount of water introduced to the heater 40 may be adjusted by opening and closing the introduction valve 10, and here, opening and closing of the introduction valve 10 may be controlled by the valve controller 50.

In detail, the introduction valve 10 may adjust the amount of water introduced to the heater 40 by controlling the size of a sectional area of an opened flow channel or an opening time of the flow channel.

As for the method of adjusting the size of the sectional area of the flow channel, the introduction valve 10 may close a portion of or the entirety of the sectional area of the flow channel through a flow channel closing unit such as a disk, or the like. The amount of water introduced to the heater 40 per unit time may be controlled by adjusting the size of the closed sectional area of the flow channel.

As for the method of adjusting the opening time, an amount of water introduced to the heater 40 per unit time may be adjusted by periodically repeating opening and closing the introduction valve 10. The periodically opening and closing of the introduction valve 10 may be implemented by pulse width modulation (PWM). In an embodiment of the introduction valve 10 implemented by PWM, the introduction valve 10 may receive a control signal in the form of a pulse of a certain period transmitted from the valve controller 50, and when the pulse is high, the introduction valve 10 may be opened, and when the pulse is low, the introduction valve 10 may be closed. Here, as a time duration for which the pulse transmitted by the valve controller 50 is high is longer, the introduction valve 10 may allow a greater amount of water per unit time to be introduced to the heater 40.

The valve controller 50 may control the degree of opening and closing of the introduction valve 10 by using the target water temperature and the heating capacity.

In detail, a flow rate of water introduced to the heater 40 may be obtained by using the equation shown below:

$$V = \frac{w\Delta t}{c\rho(T_1 - T_2)}$$

In the above equation, V is a volume of introduced water, w is a heating capacity, c is specific heat, $\Delta t$ is a heating time duration, $\rho$ is density of water, $T_1$ is a target water temperature, and $T_2$ is a temperature of introducedwater.

$\Delta t$, a heating time duration of water introduced to the heater 40, may be determined based on information regarding a response time until when warm water is received, among information provided by the main control device 200 from the warm water supply device 100. Alternatively, $\Delta t$ may be a constant as a pre-set value.

$T_1$, a target water temperature, may be a temperature of warm water input by the user. The target water temperature may be obtained such that the main control device 200 receives the target water temperature from the user and then provides it through the communication unit 70. $T_2$, a temperature of introduced water, may be measured by the temperature sensing unit 60.

Here, the heating capacity w, the specific heat c of water, the heating time $\Delta t$, the density p of water, the target water temperature, and the temperature $T_2$ of introduced water are already known values, so the volume V of introduced water can be easily calculated. Thus, when water by the amount V of water calculated through the above equation is introduced to the heater 40, water having the target water temperature can be extracted from the heater 40.

Also, the valve controller 50 may control opening and closing of the introduction valve 10 according to the calculated flow rate. Namely, the valve controller 50 may sense a flow rate of water introduced to the heater 40 after the introduction valve 10 is opened, and when the sensed flow rate is equal to the calculated flow rate of water, the valve controller 50 may close the introduction valve 10, thus controlling opening and closing of the introduction valve 10. Alternatively, the valve controller 50 may sense the calculated flow rate of water and the flow rate of water introduced to the heater 40 and control opening and closing of the introduction valve 10 according to a feedback control scheme.

Water may be introduced to the heater 40 at the calculated flow rate by the valve controller 50, and accordingly, the heater 40 may output water having a target water temperature.

Although not shown, the valve controller 50 includes a feedback unit receiving feedback from at least any one of a current and a voltage applied to the heater 40. The valve controller 50 calculates a heating capacity of the heater 40 by using at least any one of the current and the voltage sensed by the feedback unit, and determine the calculated heating capacity of heater 40 as a feedback heating capacity. When the feedback heating capacity is different from the heating capacity of the heater 40, the valve controller 50 may reset the degree of opening and closing of the introduction valve 10 by using the feedback heating capacity and the target water temperature.

Namely, in Equation $V = \frac{w\Delta t}{c\rho(T_1 - T_2)}$, a flow rate of water to be introduced to the heater 40 may be calculated again by substituting the heating capacity w with the feedback heating capacity w' and the degree of opening and closing of the introduction valve 10 may be reset according to the calculated flow rate of water.

The heating capacity refers to calorie provided for a unit time by the heater 40 on the assumption that the load of the heater 40, i.e., resistance of the heater 40 is uniform and a power source supplying power to the heater 40 is uniform.

However, in actuality, the load of the heater 40 may have an error of a certain range, and the power source supplying power to the heater may also have an error in the size of a supplied voltage, or the like. For example, when the heater 40 has a heating capacity of 2400W, an actual heating capacity of the heater 40 may vary within the range from 1800W to 3200W due to an error such as in the load of the heater 40, commercial power, and the like. In this case, if the degree of opening and closing of the introduction value 10 is adjusted by calculating the flow rate of water introduced to the heater 40 only with the heating capacity, the temperature of water output from the heater 40 cannot reach the target water temperature. In particular, in case in which the actual heating capacity is as high as 3200W, if the amount of water introduced to the heater 40 is adjusted on the basis of the heating capacity 2400W, the heater 40 would possibly be overheated to cause a fire.

Thus, in order to avoid such a problem, the valve controller 50 may receive feedback from at least any one of a current and a voltage applied to the heater 40 by using the feedback unit. Namely, the valve control unit 50 may calculate the feedback heating capacity of the heater 40 by using the feedback current or voltage, and adjust a flow rate of water introduced to the heater 40 according to the feedback heating capacity.

In detail, the heating capacity of the heater may be expressed in watts, so the feedback heating capacity may be calculated by using $P = V*I = I^2*R = V^2/R$. Here, if both of the voltage and the current applied to the heater 40 are received, the feedback heating capacity of the heater 40 may be more precisely calculated, but in this case, costs may be increased. Thus, only any one of the voltage and the current applied to the heater 40 may be received to calculate the feedback heating capacity of the heater 40.

For example, in case in which the feedback heating capacity of the heater 40 is calculated upon receiving feedback from the current applied to the heater 40, since $P = I^2*R$, the feedback heating capacity P may be calculated according to a current value I and a resistance value R of the heater 40. In this case, the calculated feedback heating capacity P of the heater 40 may vary due to an error according to the resistance value R of the heater 40.

Here, however, since the resistance value of the heater 40 is generated within a certain margin of error on the basis of a pre-set value, so the feedback heating capacity of the heater 40 can be calculated within the margin of error. Since an error according to the resistance value may be considered to be within an acceptable range, the feedback heating capacity of the heater 40 can be calculated by using the feedback current value.

Alternatively, in order to minimize the error according to the resistance value of the heater 40, a resistance value of the heater 40 may be directly obtained, and then, the feedback heating capacity may be calculated. Namely, the resistance value of the heater 40 may be directly measured in such a manner that a pre-set voltage is applied to the heater 40, and then, a current output from the heater 40 is measured. An error of the resistance of the heater 40 is generated during a manufacturing process, and here, resistance values of respective heaters 40 may have an error, but each heater 40 may have a resistance value having a fixed size. Thus, the resistance of the heater 40 may be measured one time during a manufacturing process or during an installation process of the heater 40 and the feedback heating capacity may be calculated on the basis of the measured resistance value.

Thus, the valve controller 50 includes the feedback unit to calculate the actual heating capacity of the heater 40 to set it as a feedback heating capacity, and reset the degree of opening and closing of the introduction valve 10 by using the feedback heating capacity and the target water temperature.

The flow rate sensing unit 20 may sense an amount of water introduced to the heater 40. The flow rate sensing unit 20 may sense a flow rate of water being introduced to the heater 40 through the introduction valve 10 or may sense a flow rate of water which has been introduced to the heater 40. The flow rate sensing unit 20 may include a rotor rotating according to a movement of introduced water. An amount of water introduced to the heater 40 may be sensed by measuring the number of rotations of the rotor per unit time.

When the sensed amount of water is equal to or less than a minimum operation flow rate, the heater driving controller 30 may not operate the heater 40.

When water in excess of the minimum operation flow rate is not introduced to the heater 40, the heater driving controller 30 may prevent the heater 40 from being driven. If the heater 40 is driven even if water in excess of the minimum operation flow rate is not introduced to the heater 40, the heater 40 would possibly be overheated to be damaged and there is a risk of fire. Thus, the heater driving controller 30 is configured to drive the heater 40 at least when water in excess of the minimum operation flow rate is introduced to the heater 40.

In addition, the heater driving controller 30 may control the heating capacity of the heater 40 by adjusting an operating period of the heater 40 according to the phase control scheme or the zero crossing control scheme.

According to the phase control scheme or the zero crossing control scheme, the heating capacity of the heater 40 can be controlled and an amount of water introduced in to the heater 40 can be controlled by the valve controller 50. Thus, by controlling the heating capacity of the heater 40 and the amount of water introduced to the heater 40, separately, the control coverage of the warm water supply device 100 can be extended.

In detail, when the amount of water introduced to the heater 40 is small, the water introduced to the heater 40 may be heated by reducing the heating capacity of the heater 40 by using the phase control scheme or the zero crossing control scheme, or when the amount of water introduced to the heater 40 is large, the water introduced to the heater 40 may be heated by increasing the heating capacity of the heater 40.

Also, when the target water temperature is high or a response time required for requested warm water to be received from the warm water supply device 100 is short, the flow rate of water introduced to the heater 40 is reduced to be a minimum amount with which the heater 40 can be operable and the heating capacity of the heater 40 is increased to heat water, to thereby satisfy the target water temperature and the response time requested by the user.

The temperature sensing unit 60 may sense the temperature of water introduced to the heater through the introduction valve 10 or the temperature of water heated by the heater 40. The temperature sensing unit 60 may include at least one temperature sensor. The temperature sensor may be disposed at a water inflow portion of the heater 40 or a water outflow portion of the heater 40. Thus, the temperature of water introduced to the heater 40 or temperature of water output from the heater 40 may be sensed by using the temperature sensor.

The temperature sensing unit 60 may transmit the temperature $T_2$ of water introduced to the heater 40 to the valve controller 50, and the valve controller 50 may calculate a flow rate of water to be introduced to the heater 40 by using the temperature of water.

Also, the temperature $T_2$ of water introduced to the heater 40 may be compared with the target water temperature, and when the temperature $T_2$ of water introduced to the heater 40 is lower than the target water temperature, the heater 40 may be driven.

The communication unit 70 may transmit and receive information between the main control device 200 and the warm water supply device 100.

The communication unit 70 may receive information such as the target water temperature, whether to supply water to the warm water supply device 100, a response time required for requested warm water to be received from the warm water supply device 100, and the like, transmitted by the main control device 200. The communication unit 70 may transmit information such as the target water temperature and the response time required for requested warm water to be received from the warm water supply device 100 to the valve controller 50. Also, the communication unit 70 may transmit a flow rate of water output from the heater 40, temperature of the water output from the heater 40, and the like, to the main control device 200.

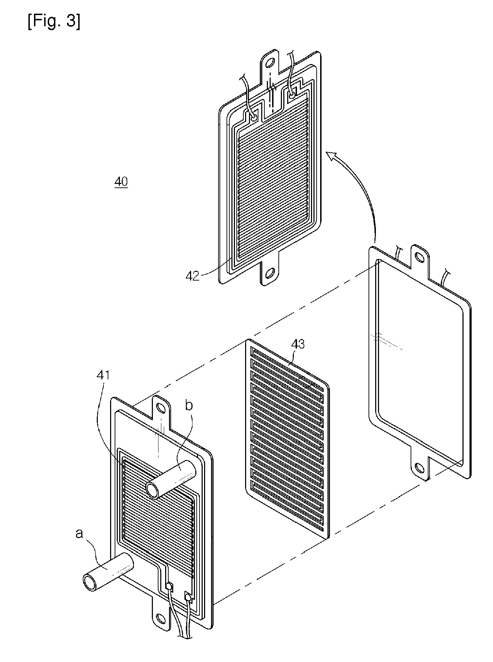

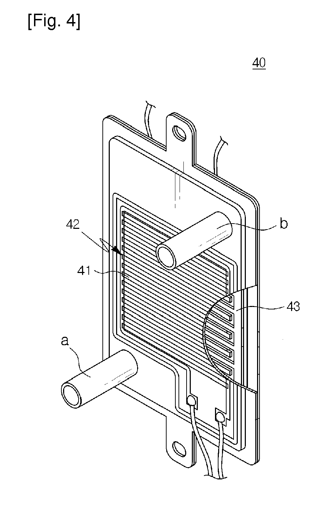

FIG. 3 is an exploded perspective view showing the heater of the warm water supply device according to an embodiment of the present invention. FIG. 4 is a perspective view showing the coupled heater of the warm water supply device according to an embodiment of the present invention.

With reference to FIGS. 3 and 4, the heater 40 of the warm water supply device according to an embodiment of the present invention may include an upper plate heater 41, a lower plate heater 42, and a heating flow channel 43.

Hereinafter, the heater 40 of the warm water supply device according to an embodiment of the present invention will be described with reference to FIGS. 3 and 4.

The heater 40 serves to heat water introduced therein with a pre-set heating capacity. As illustrated, the heater 40 may be divided into the upper plate heater 41 and the lower plate heater 42. The upper plate heater 41 may heat introduced water with a first heating capacity, and the lower plate heater 42 may be disposed to face the upper plate heater 41 and heat the introduced water with a second heating capacity.

The heating flow channel 43 may be provided between the upper plate heater 41 and the lower plate heater 42. Water introduced to the heating flow channel 43 may be heated by at least any one of the upper plate heater 41 and the lower plate heater 42. Here, water may be introduced to the heating flow channel 43 through an inlet a and extracted through an outlet b.

Although not shown, the amount of water introduced to the heating flow channel 43 may be controlled by using the introduction valve, and the introduction valve may be adjusted by the controller.

The valve may control the degree of opening and closing of the introduction valve by using the first heating capacity and the second heating capacity, and may adjust the size of the overall heating capacity for heating the introduced water by selecting at least any one of the upper plate heater 41 and the lower plate heater 42. In detail, the controller may select at least any one of the upper plate heater and the lower plate heater by using the target water temperature, a flow rate of water introduced to the heating flow channel, and the temperature of the introduced water.

Here, the first heating capacity of the upper plate heater 41 and the second heating capacity of the second heating capacity may be equal or different. In detail, the upper plate heater 41 may have a heating capacity of 950W, and the lower plate heater 42 may have a heating capacitor of 1450W. This is to adjust the overall heating capacity of the heater 40 by operating any one of the upper plate heater 41 and the lower plate heater 42, or the both.

Namely, the controller may heat the introduced water with the heating capacity of 950W by operating the upper plate heater 41 alone or with the heating capacity of 1450W by operating the lower plate heater 42 alone, or may heat the introduced water with the heating capacity of 2400W by operating both of the upper plate heater 41 and the lower plate heater 42. Thus, any one of the heating capacities may be selected in consideration of the temperature of introduced water, a time required for water to be output, a target water temperature, a flow rate of output water, and the like.

Also, the control coverage of the warm water supply device 100 may be further extended by controlling the heating capacity of the heater 40 and the amount of water introduced to the heater 40, separately.

In detail, when the amount of water introduced to the heater 40 is small, only the upper plate heater 41 may be operated to reduce the heating capacity of the heater 40, and then, the water introduced to the heater 40 may be heated, or when the amount of water introduced to the heater 40 is large, the lower plate heater 42 may be operated to increase the heating capacity of the heater 40, and then, the water introduced to the heater 40 may be heated.

Also, when the target water temperature is high or a response time required for requested warm water to be received from the warm water supply device 100 is short, the flow rate of water introduced to the heater 40 is reduced to be a minimum amount with which the heater 40 can be operable and both the upper plate heater 41 and the lower plate heater 42 are operated to heat the introduced, thereby satisfying the target water temperature and the response time requested by the user.

In addition, the controller may detect the amount of water introduced to the heating flow channel 43, and when the amount of introduced water is equal to or less than the minimum operation flow rate, the controller may not operate the heater 40. This is to prevent malfunction such as damage of the component resulting from overheated heater 40 as discussed above.

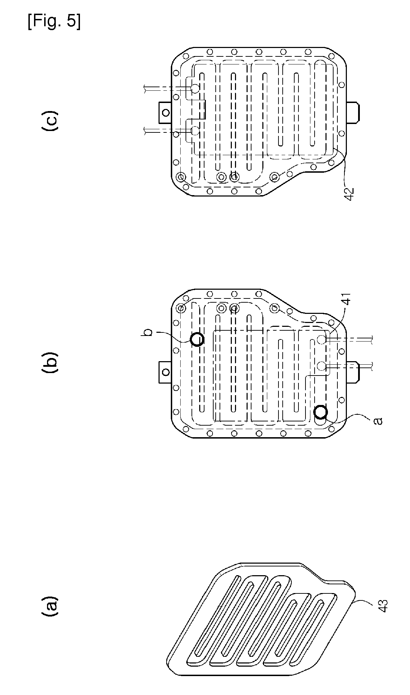

FIG. 5 is a sectional view showing a heater of a warm water supply device according to another embodiment of the present invention. With reference to FIG. 5, it is illustrated that flow channels are configured in order to prevent water introduced to the heating flow channel 43 from being partially overheated to generate steam.

In detail, the heating flow channel 43 includes one or more horizontal portions along which water flows horizontally and one or more vertical portions along which water flows vertically. The width of the horizontal portions may be reduced toward the outlet b from the inlet a, and the length of the horizontal portions may be increased toward the outlet b from the inlet a. The number of the vertical portions may range from 5 to 8, and connection portions of the horizontal portions and the vertical portions may be formed to be curved.

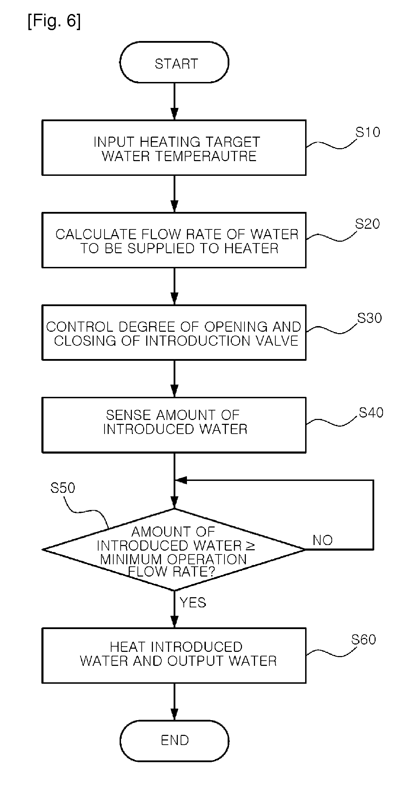

FIG. 6 is a flow chart illustrating a warm water supply method according to an embodiment of the present invention.

With reference to FIG. 6, a warm water supply method according to an embodiment of the present invention may include a target water temperature input step (S10), a flow rate calculation step (S20), an introduction valve control step (S30), and a heating step (S60). The warm water supply method according to an embodiment of the present invention may further include an inflow rate sensing process (S40) and a minimum flow rate checking step (S50).

Hereinafter, the warm water supply method according to an embodiment of the present invention will be described with reference to FIG. 6.

In the target water temperature input step (S10), when a user inputs a temperature of water desired to be received, the user input temperature may be set as a target water temperature. Information regarding the temperature input by the user may be received from the main control device.

In the flow rate calculation step (S20), an amount of water to be introduced to the heater may be calculated by using the target water temperature and a heating capacity of the heater.

In detail, the amount of water to be introduced to the heater may be obtained by using an equation shown below:

[Equation]

$$V = \frac{w\Delta t}{c\rho(T_1 - T_2)}$$

In the above equation, V is a volume of introduced water, w is a heating capacity, c is specific heat, $\Delta t$ is a heating time duration, $\rho$ is density of water, $T_1$ is a target water temperature, and $T_2$ is a temperature of introduced water.

$\Delta t$, a heating time duration of water introduced to the heater 40, may be received from the outside or may be a fixed constant. $T_1$, a target water temperature, may be a temperature of warm water desired to be received by the user in step (S 10) of receiving the target water temperature. $T_2$, a temperature of introduced water, may be measured through a temperature measurement step or may be a pre-set constant.

Although not shown, the flow rate calculation step (S20) may include a feedback process and an error correction process. In the flow rate calculation step (S20), an error of the temperature of output water that may occur when the heating capacity is changed may be adjusted through the feedback process and the error correction process.

In detail, the heating capacity is set by a load of the heater and power applied to the heater. When the load of the heater and the power applied to the heater are uniform, the heating capacity can be uniformly maintained. However, in actuality, a resistance value of the heater and power supplied to the heater may be changed due to various factors, so the heating capacity may be changed. For example, a heater having a heating capacity of 2400W may be changed within a range from about 1800W to about 3200W, according to a change in a voltage of commercial AC power.

In spite of the difference between the actual heating capacity and the heating capacity of the heater, when the amount of water to be introduced to the heater is set with the heating capacity and heated, the temperature of water output from the heater may be greatly different from the target water temperature. Thus, in order to provide water having the target water temperature even in the case that the heating capacity of the heater is changed, the feedback process and the error correction process of the flow rate calculation step (S20) may be used.

In detail, in the feedback process, a feedback heating capacity can be calculated upon receiving feedback from at least any one of a current and a voltage applied to the heater. The heating capacity of the heater may be expressed in watts, so the feedback heating capacity may be calculated by using $P = V*I = I^2*R = V^2/R$. When both of the voltage and the current applied to the heater are fed back, an accurate heating capacity of the heater may be calculated. When only any one of the voltage and the current is fed back, there may be an error, even in the calculated feedback heating capacity, due to the error in heater resistance.

The heater resistance has a certain margin of error with respect to the pre-set heater resistance value, and a variation of the feedback heating capacity value due to the error of the heater resistance is insignificant over the overall feedback heating capacity, which may be considered to be included in an acceptable range. Thus, at least any one of the current and the voltage applied to the heater may be fed back to calculate the feedback heating capacity of the heater.

In addition, in order to minimize the error according to the resistance value of the heater 40, a resistance value of the heater 40 may be directly obtained. Namely, the resistance value of the heater 40 may be directly measured in such a manner that a pre-set voltage is applied to the heater 40, and then, a current output from the heater 40 is measured. An error of the resistance of the heater 40 is generated during a manufacturing process, and here, resistance values of respective heaters 40 may have an error, but each heater 40 may have a resistance value having a fixed size. Thus, the resistance of the heater 40 may be measured one time during a manufacturing process or during an installation process of the heater 40 and the feedback heating capacity may be calculated on the basis of the measured resistance value.

Thereafter, in the error correction process, the amount of water to be introduced to the heater may be reset by using the feedback heating capacity and the target water temperature. Namely, when the feedback heating capacity calculated in the feedback process is different from the heating capacity, a flow rate of water to be introduced to the heater 40 may be calculated again by substituting the heating capacity w with the feedback heating capacity w' in Equation

$$V = \frac{w\Delta t}{c\rho(T_1 - T_2)}.$$

In the introduction valve control step S30, the introduction valve may be controlled to allow water to be introduced to the heater at the calculated flow rate. The water introduced to the heater passes through the introduction valve, so the amount of water introduced to the heater may be controlled by controlling opening and closing of the introduction valve.

The method for controlling opening and closing the introduction valve may be implemented such that an amount of water introduced to the introduction valve is sensed, and when the sensed amount of water is equal to the calculated inflow amount of water, the introduction valve is closed.

In the heating step (S60), water introduced to the heater may be heated with the heating capacity of the heater. Here, the heating capacity may be a maximum heating capacity of the heater.

In addition, in the heating step (S60), the heating capacity of the heater may be controlled by adjusting an operating period of the heater according to the phase control scheme or the zero crossing control scheme.

After the introduction valve control step (S30), the flow rate detection process (S40) and the minimum flow rate checking process (S50) may be further included.

According to the processes (S40 and S50), the heater can be prevented from being driven when water does not exceed the minimum operation flow rate of the heater. If the heater is driven when water in excess of the minimum operation flow rate is not introduced to the heater, the heater would be possibly overheated and damaged, and there is a risk of fire. Thus, by including the processes (S40 and S50), the heater may be driven at least when water in excess of the minimum operation flow rate is introduced to the heater.

In the heating step (S60), a heater including a plurality of heat generators each set to have the same heating capacity or different heating capacities may be used. Here, the step (S60) of heating introduced water by the heater may include determining heat generator(s) to be driven among the plurality of heat generators by using an amount of water introduced to the heater, a target water temperature, and the heating capacities of the plurality of heat generators and driving the plurality of determined heat generators to heat water introduced to the heater.

Also, the heating capacity of each of the heat generators may be set to a maximum heating capacity thereof.

Although not shown, the warm water supply method according to an embodiment of the present invention may further include a heating capacity selecting step.

Here, the heater may include the upper plate heater having the first heating capacity and the lower plate heater having the second heating capacity, and at least any one of the upper plate heater and the lower plate heater may be selected in the heating capacity selecting step to adjust the size of the overall heating capacity. In detail, in the heating capacity selecting step, at least one of the upper plate heater and the lower plate heater may be selected by using the target water temperature and the temperature of introduced water.

The heating capacity selecting step may be simultaneously performed together with the introduction valve control step (S30), may be performed before the introduction valve control step (S30), or may be performed after the introduction valve control step (S30).

**Claims**

1. A warm water supply device (100) comprising:

   a heater (40) heating water introduced therein with a heating capacity;

an introduction valve (10) adjusting an amount of water introduced to the heater; and

a valve controller (50) controlling a degree of opening and closing of the introduction valve (10) by using a target water temperature and the heating capacity,

wherein the valve controller (50) calculates a flow rate of water to be introduced to the heater (40) through an equation shown below, and controls the degree of opening and closing of the introduction valve (10) according to the calculated flow rate,

$$V = \frac{w \cdot (\Delta t)}{c \cdot \rho \cdot (T_1 - T_2)}$$

wherein V is a volume of introduced water, w is a heating capacity, c is specific heat, ρis density of water, $\Delta t$ is a heating time duration, $T_1$ is a target water temperature, and $T_2$ is a temperature of introduced water,

wherein the valve controller (50) comprises a feedback unit receiving feedback from at least any one of a current and a voltage applied to the heater (40), and

calculates a feedback heating capacity of the heater by using at least any one of the current and voltage sensed by the feedback unit, and then resets the degree of opening and closing of the introduction valve (10) by using the feedback heating capacity and the target water temperature.

2. The warm water supply device (100) of claim 1, wherein the warm water supply device further comprises a flow rate sensing unit (20) sensing an amount of water introduced to the heater; and

a heater driving controller (30) not operating the heater (40) when the sensed amount of water is equal to or less than a minimum operation flow rate.

3. The warm water supply device (100) of claim 2, wherein the heater driving controller (30) controls the heating capacity of the heater by adjusting an operating period of the heater according to a phase control scheme or a zero crossing control scheme.

4. The warm water supply device (100) of claim 1, wherein the heater comprises an upper plate heater (41) heating water introduced therein with a first heating capacity;

a lower plate heater (42) opposed to the upper plate heater and heating the introduced water with a second heating capacity; and

a heating flow channel (43) provided between the upper plate heater and the lower plate heater,

wherein the valve controller (50) calculates a flow rate of water to be introduced to the heater by using a target water temperature, a first heating capacity, and a second heating capacity and controls a degree of opening and closing of the introduction valve (10) according to the calculated flow rate.

5. The warm water supply device (100) of claim 4, wherein the valve controller (50) adjusts the size of the overall heating capacity for heating the introduced water by selecting any one of the upper plate heater (41) and the lower plate heater (42).

6. The warm water supply device (100) of claim 5, wherein the valve controller (50) selects at least one of the upper plate heater (41) and the lower plate heater (42) by using the target water temperature, a flow rate of water introduced to the heating flow channel (43), and a temperature of the introduced water.

7. The warm water supply device (100) of claim 4, wherein the valve controller (50) does not operate the heater (40) when the amount of introduced water is equal to or less than a minimum operation flow rate.

8. A warm water supply method comprising:

a flow rate calculation step of calculating an amount of water to be introduced to a heater by using a target water temperature and a heating capacity of the heater;

an introduction valve control step of adjusting a degree of opening and closing of the introduction valve to allow water to be introduced to the heater at the calculated flow rate; and

a heating step of heating the water introduced to the heater with the heater (40),

wherein, in the flow rate calculation step, a flow rate of water to be introduced to the heater is calculated through an equation shown below,

$$V = \frac{w \cdot (\Delta t)}{c \cdot \rho \cdot (T_1 - T_2)}$$

wherein V is a volume of introduced water, w is a heating capacity, c is specific heat, ρis density of water, $\Delta t$ is a heating time duration, $T_1$ is a target water temperature, and $T_2$ is a temperature of introduced water, and

wherein the flow rate calculation step comprises: a feedback process of receiving feedback from at least any one of a current and a voltage applied to the heater and calculating a feedback heating capacity of the heater; and an error correction process of re-setting an amount of water introduced to the heater by using the feedback heating capacity and the target water temperature.

9. The warm water supply method of claim 8, wherein the heating step comprises:

an inflow amount sensing process of sensing an amount of water introduced to the heater; and a minimum flow rate checking process of not operating the heater when the sensed amount of water is equal to or less than a minimum operation flow rate.

10. The warm water supply method of claim 9, wherein, in the heating step, the heating capacity of the heater is controlled by adjusting an operating period of the heater according to a phase control scheme or a zero crossing control scheme.

11. The warm water supply method of claim 8, wherein the heater (40) comprises an upper plate heater (41) having a first heating capacity and a lower plate heater (42) having a second heating capacity, and the method further comprising a heating capacity selecting step of selecting any one of the upper plate heater (41) and the lower plate heater (42) to adjust the size of the overall heating capacity.

12. The warm water supply method of claim 11, wherein, in the heating capacity selecting step, at least any one of the upper plate heater (41) and the lower plate heater (42) is selected by using the target water temperature, a flow rate of introduced water, and temperature of the introduced water.

**Patentansprüche**

1. Warmwasserversorgungsvorrichtung (100), die aufweist:

ein Heizmittel (40), das darin eingeleitetes Wasser mit einer Wärmekapazität erwärmt; ein Einleitungsventil (10), das eine Wassermenge einstellt, die in das Heizmittel eingeleitet wird; und eine Ventilsteuerung (50), die einen Grad des Öffnens oder Schließens des Einleitungsventils (10) unter Verwendung einer Zielwassertemperatur und der Wärmekapazität steuert, wobei die Ventilsteuerung (50) eine Flussrate des Wassers, das in das Heizmittel (40) eingeleitet werden soll, durch eine unten gezeigte Gleichung berechnet und den Grad des Öffnens und Schließens des Einleitungsventils (10) entsprechend der berechneten Flussrate steuert,

$$V = \frac{w \cdot (\Delta t)}{c \cdot \rho \cdot (T_1 - T_2)}$$

wobei V ein Volumen des eingeleiteten Wassers, $w$ eine Wärmekapazität, c eine spezifische Wärme, $\rho$ die Dichte von Wasser, $\Delta t$ eine Erwärmungszeitspanne, $T_1$ eine Zielwassertemperatur und $T_2$ eine Temperatur des eingeleiteten Wassers ist, wobei die Ventilsteuerung (50) eine Rückmeldungseinheit aufweist, die Rückmeldung von wenigstens einem aus einer Stromstärke und einer Spannung, die an das Heizmittel (40) angelegt sind, empfängt, und eine Rückmeldungswärmekapazität des Heizmittels unter Verwendung von wenigstens einem aus Stromstärke und Spannung, die von der Rückmeldungseinheit gemessen sind, berechnet und dann den Grad des Öffnens und Schließens des Einleitungsventils (10) unter Verwendung der Rückmeldungswärmekapazität und der Zielwassertemperatur neu einstellt.

2. Warmwasserversorgungsvorrichtung (100) nach Anspruch 1, wobei die Warmwasserversorgungsvorrichtung weiter eine Flussratenmesseinheit (20), die eine Wassermenge misst, die in das Heizmittel eingeleitet wird; und eine Heizmittelansteuerungssteuerung (30) aufweist, die das Heizmittel (40) nicht betreibt, wenn die gemessene Wassermenge gleich oder kleiner einer minimalen Betriebsflussrate ist.

3. Warmwasserversorgungsvorrichtung (100) nach Anspruch 2, wobei die Heizmittelansteuerungssteuerung (30) die Wärmekapazität des Heizmittels durch Einstellen einer Betriebsperiode des Heizmittels nach einem Phasensteuerschema oder einem Nullstellensteuerschema steuert.

4. Warmwasserversorgungsvorrichtung (100) nach Anspruch 1, wobei das Heizmittel ein oberes Plattenheizmittel (41), das darin eingeleitetes Wasser mit einer ersten Wärmekapazität erwärmt; ein unteres Plattenheizmittel (42), das gegenüber dem oberen Plattenheizmittel liegt und das eingeleitete Wasser mit einer zweiten Wärmekapazität erwärmt; und einen Erwärmungsflusskanal (43) aufweist, der zwischen dem oberen Plattenheizmittel und dem unteren Plattenheizmittel bereitgestellt wird, wobei die Ventilsteuerung (50) eine Flussrate des Wassers, das in das Heizmittel eingeleitet werden soll, unter Verwendung einer Zielwassertemperatur, einer ersten Wärmekapazität und einer zweiten Wärmekapazität berechnet und einen Grad des Öffnens und Schließens des Einleitungsventils (10) entsprechend der berechneten Flussrate kontrolliert.

5. Warmwasserversorgungsvorrichtung (100) nach Anspruch 4, wobei die Ventilsteuerung (50) die Größe der Gesamtwärmekapazität zum Erwärmen des eingeleiteten Wassers durch Auswahl eines aus dem oberen Plattenheizmittel (41) und dem unteren Plattenheizmittel (42) einstellt.

6. Warmwasserversorgungsvorrichtung (100) nach Anspruch 5, wobei die Ventilsteuerung (50) wenigstens eines aus dem oberen Plattenheizmittel (41) und dem unteren Plattenheizmittel (42) durch Verwendung der Zielwassertemperatur, einer Flussrate des in den Erwärmungsflusskanal (43) eingelassenen Wassers und einer Temperatur des eingeleiteten Wassers auswählt.

7. Warmwasserversorgungsvorrichtung (100) nach Anspruch 4, wobei die Ventilsteuerung (50) das Heizmittel (40) nicht betreibt, wenn die Menge des eingeleiteten Wassers gleich oder kleiner als eine minimale Betriebsflussrate ist.

8. Warmwasserversorgungsverfahren, das aufweist:

   einen Flussratenberechnungsschritt zum Berechnen einer Wassermenge, die in ein Heizmittel eingeleitet werden soll, durch Verwendung einer Zielwassertemperatur und einer Wärmekapazität des Heizmittels;
   einen Einleitungsventilsteuerschritt zum Einstellen eines Grades des Öffnens oder Schließens des Einstellungsventils, um es dem Wasser zu ermöglichen in das Heizmittel mit der berechneten Flussrate eingeleitet zu werden; und
   einen Erwärmungsschritt zum Erwärmen des in das Heizmittel eingeleiteten Wassers mit dem Heizmittel (40),
   wobei in dem Flussratenberechnungsschritt eine Flussrate des Wassers, das in das Heizmittel (40) eingeleitet werden soll, durch eine unten gezeigte Gleichung berechnet wird,

$$V = \frac{w \cdot (\Delta t)}{c \cdot \rho \cdot (T_1 - T_2)}$$

   wobei V ein Volumen des eingeleiteten Wassers, $w$ eine Wärmekapazität, c eine spezifische Wärme, $\rho$ die Dichte von Wasser, $\Delta t$ eine Erwärmungszeitspanne, $T_1$ eine Zielwassertemperatur und $T_2$ eine Temperatur des eingeleiteten Wassers ist, und
   wobei der Flussratenberechnungsschritt aufweist: einen Rückmeldungsprozess zum Empfangen einer Rückmeldung von wenigstens einem aus einer Stromstärke und einer Spannung, die an das Heizmittel angelegt sind, und zum Berechnen einer Rückmeldungswärmekapazität des Heizmittels; und einen Fehlerkorrekturprozess zum neu Einstellen einer Wassermenge, die in das Heizmittel eingeleitet wird, unter Verwendung der Rückmeldungswärmekapazität und der Zielwassertemperatur.

9. Warmwasserversorgungsverfahren nach Anspruch 8, weiter der Erwärmungsschritt aufweist:

   einen Flussratenmessprozess zum Messen einer Wassermenge, die in das Heizmittel eingeleitet wird; und

   einen Minimaleflussrateprüfungsprozess zum Nicht-Betreiben des Heizmittels,

   wenn die gemessene Wassermenge gleich oder kleiner als eine minimale Betriebsflussrate ist.

10. Warmwasserversorgungsverfahren nach Anspruch 9, wobei in dem Erwärmungsschritt die Wärmekapazität des Heizmittels durch Einstellen einer Betriebsperiode des Heizmittels nach einem Phasensteuerschema oder einem Nullstellensteuerschema gesteuert wird.

11. Warmwasserversorgungsverfahren nach Anspruch 8, wobei das Heizmittel (40) ein oberes Plattenheizmittel (41) mit einer ersten Wärmekapazität und ein unteres Plattenheizmittel (42) mit einer zweiten Wärmekapazität aufweist, und
   das Verfahren weiter einen Wärmekapazitätauswahlschritt zum Auswählen eines aus dem oberen Plattenheizmittel (41) und dem unteren Plattenheizmittel (42) zum Einstellen der Größe der Gesamtwärmekapazität aufweist.

12. Warmwasserversorgungsverfahren nach Anspruch 11, wobei in dem Wärmekapazitätsauswahlschritt wenigstens eines aus dem oberen Plattenheizmittel (41) und dem unteren Plattenheizmittel (42) unter Verwendung der Zielwassertemperatur, einer Flussrate des eingeleiteten Wassers und einer Temperatur des eingeleiteten Wassers ausgewählt wird.

**Revendications**

1. Dispositif d'alimentation en eau chaude (100) comprenant :

   un réchauffeur (40) chauffant l'eau entrante avec une capacité de chauffage ;
   une vanne d'entrée (10) ajustant une quantité d'eau introduire dans le réchauffeur ; et
un contrôleur de vanne (50) contrôlant un degré d'ouverture et de fermeture de la vanne d'entré (10) en utilisant une température d'eau cible et la capacité de chauffage, dans lequel le contrôleur de vanne (50) calcule un débit d'eau devant être introduit dans le réchauffeur (40) par le biais d'une équation énoncée ci-dessous, et contrôle le degré d'ouverture et de fermeture de la vanne d'entrée (10) selon le débit calculé,

$$V = \frac{w \cdot (\Delta t)}{c \cdot p \cdot (T_1 - T_2)}$$

dans laquelle V est un volume d'eau introduite, w est une capacité de chauffage, c est la chaleur spécifique, p est la densité d'eau, $\Delta t$ est une durée de chauffage, $T_1$ est une température d'eau cible et $T_2$ est une température d'eau introduite, dans lequel le contrôleur de vanne (50) comprend une unité de rétroaction recevant une rétroaction d'au moins l'un quelconque parmi un courant et une tension appliqués au réchauffeur (40), et
calcule une capacité de chauffage de rétroaction du réchauffeur à l'aide d'au moins l'un quelconque parmi le courant et la tension détectés par l'unité de rétroaction, et réinitialise ensuite le degré d'ouverture et de fermeture de la vanne d'entrée (10) à l'aide de la capacité de chauffage de rétroaction et de la température d'eau cible.

2. Dispositif d'alimentation en eau chaude (100) selon la revendication 1, dans lequel le dispositif d'alimentation en eau chaude comprend en outre une unité de détection de débit (20) détectant une quantité d'eau introduite dans le réchauffeur ; et
un contrôleur de commande de réchauffeur (30) ne faisant pas fonctionner le réchauffeur (40) lorsque la quantité détectée d'eau est inférieure ou égale à un débit de fonctionnement minimum.

3. Dispositif d'alimentation en eau chaude (100) selon la revendication 2, dans lequel le contrôleur de commande de réchauffeur (30) contrôle la capacité de chauffage du réchauffeur en ajustant une période de fonctionnement du réchauffeur selon un schéma de contrôle de phase ou un schéma de contrôle de passage par zéro.

4. Dispositif d'alimentation en eau chaude (100) selon la revendication 1, dans lequel le réchauffeur comprend un réchauffeur de plaque supérieure (41) chauffant l'eau introduite dans le dispositif avec une première capacité de chauffage ;
un réchauffeur de plaque inférieure (42) opposé au réchauffeur de plaque supérieure et chauffant l'eau introduite avec une seconde capacité de chauffage ; et
un canal d'écoulement chauffant (43) disposé entre le réchauffeur de plaque supérieure et le réchauffeur de plaque inférieure,
dans lequel le contrôleur de vanne (50) calcule un débit d'eau devant être introduite dans le réchauffeur en utilisant une température d'eau cible, une première capacité de chauffage, et une seconde capacité de chauffage et contrôle un degré d'ouverture et de fermeture de la vanne d'ouverture(10) selon le débit calculé.

5. Dispositif d'alimentation en eau chaude (100) selon la revendication 4, dans lequel le contrôleur de vanne (50) ajuste la taille de la capacité de chauffage globale pour chauffer l'eau introduite en sélectionnant l'un quelconque du réchauffeur de plaque supérieure (41) et du réchauffeur de plaque inférieure (42).

6. Dispositif d'alimentation en eau chaude (100) selon la revendication 5, dans lequel le contrôleur de vanne (50) sélectionne au moins l'un du réchauffeur de plaque supérieure (41) et du réchauffeur de plaque inférieure (42) en utilisant la température d'eau cible, un débit d'eau introduite dans le canal d'écoulement chauffant (43), et une température de l'eau introduite.

7. Dispositif d'alimentation en eau chaude (100) selon la revendication 4, dans lequel le contrôleur de vanne (50) ne fait pas fonctionner le réchauffeur (40) lorsque la quantité d'eau introduite est inférieure ou égale à un débit de fonctionnement minimum.

8. Procédé d'alimentation en eau chaude comprenant :

une étape de calcul de débit consistant à calculer une quantité d'eau devant être introduite dans un réchauffeur en utilisant une température d'eau cible et une capacité de chauffage du réchauffeur ;
une étape de contrôle de vanne d'entrée consistant à ajuster un degré d'ouverture et de fermeture de la vanne d'entrée pour permettre à l'eau d'être introduite dans le réchauffeur au débit calculé ; et
une étape de chauffage consistant à chauffer l'eau introduite dans le réchauffeur à l'aide du réchauffeur (40),
dans lequel, dans l'étape de calcul de débit, un débit d'eau devant être introduite dans le réchauffeur est calculé par le biais d'une équation énoncée ci-dessous,

$$V = \frac{w \cdot (\Delta t)}{c \cdot p \cdot (T_1 - T_2)}$$

dans laquelle V est un volume d'eau introduite, w est une capacité de chauffage, c est la chaleur spécifique, p est la densité d'eau, $\Delta t$ est une durée de chauffage, $T_1$ est une température d'eau cible, et $T_2$ est une température d'eau introduite dans le dispositif, et

dans lequel l'étape de calcul de débit comprend : un processus de rétroaction consistant à recevoir une rétroaction d'au moins l'un quelconque parmi un courant et une tension appliqués au réchauffeur et à calculer une capacité de chauffage de rétroaction du réchauffeur ; et un processus de correction d'erreur consistant à réinitialiser une quantité d'eau introduite dans le réchauffeur en utilisant la capacité de chauffage de rétroaction et la température d'eau cible.

9. Procédé d'alimentation en eau chaude selon la revendication 8, dans lequel l'étape de chauffage comprend :

un processus de détection de quantité entrante consistant à détecter une quantité d'eau introduite dans le réchauffeur ; et un processus de vérification de débit minimum consistant à ne pas faire fonctionner le réchauffeur lorsque la quantité d'eau détectée est inférieure ou égale à un débit de fonctionnement minimum.

10. Procédé d'alimentation en eau chaude selon la revendication 9, dans lequel, dans l'étape de chauffage, la capacité de chauffage du réchauffeur est contrôlée en ajustant une période de fonctionnement du réchauffeur selon un schéma de contrôle de phase ou un schéma de contrôle de passage par zéro.

11. Procédé d'alimentation en eau chaude selon la revendication 8, dans lequel le réchauffeur (40) comprend un réchauffeur de plaque supérieure (41) ayant une première capacité de chauffage et un réchauffeur de plaque inférieure (42) ayant une seconde capacité de chauffage, et le procédé comprenant en outre une étape de sélection de capacité de chauffage consistant à sélectionner l'un quelconque parmi le réchauffeur de plaque supérieure (41) et le réchauffeur de plaque inférieure (42) pour ajuster la taille de la capacité de chauffage globale.

12. Procédé d'alimentation en eau chaude selon la revendication 11, dans lequel, dans l'étape de sélection de capacité de chauffage, au moins l'un quelconque parmi le réchauffeur de plaque supérieure (41) et le réchauffeur de plaque inférieure (42) est sélectionné en utilisant la température d'eau cible, un débit d'eau introduite et la température de l'eau introduite.

[Fig. 1]

CONDUCTION ANGLE

[Fig. 2]

[Fig. 3]

[Fig. 4]

[Fig. 5]

(a)

(b)

(c)

[Fig. 6]

```
                    ┌──────────┐
                    │  START   │
                    └────┬─────┘
                         │
                         ▼
        ┌────────────────────────────────┐
        │    INPUT HEATING TARGET         │ S10
        │     WATER TEMPERAUTRE           │
        └────────────────┬───────────────┘
                         │
                         ▼
        ┌────────────────────────────────┐
        │   CALCULATE FLOW RATE OF WATER  │ S20
        │     TO BE SUPPLIED TO HEATER    │
        └────────────────┬───────────────┘
                         │
                         ▼
        ┌────────────────────────────────┐
        │  CONTROL DEGREE OF OPENING AND  │ S30
        │  CLOSING OF INTRODUCTION VALVE  │
        └────────────────┬───────────────┘
                         │
                         ▼
        ┌────────────────────────────────┐
        │      SENSE AMOUNT OF            │ S40
        │     INTRODUCED WATER            │
        └────────────────┬───────────────┘
                         │
      S50                ▼
        ◇────────────────────────────────◇
        │        AMOUNT OF                │   NO
        │   INTRODUCED WATER ≥            │──────┐
        │   MINIMUM OPERATION             │      │
        │      FLOW RATE?                 │      │
        ◇────────────────┬───────────────◇      │
                         │ YES                   │
                         ▼                       │
        ┌────────────────────────────────┐      │
        │    HEAT INTRODUCED              │ S60  │
        │  WATER AND OUTPUT WATER         │      │
        └────────────────┬───────────────┘      │
                         │                       │
                         ▼                       │
                    ┌──────────┐                 │
                    │   END    │                 │
                    └──────────┘                 │
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2299184 A

- GB 2281381 A